# EUROPÄISCHE PATENTSCHRIFT

(11) **EP 4 389 518 B1**
(45) Veröffentlichungstag und Bekanntmachung des Hinweises auf die Patenterteilung: **15.07.2026**
(21) Anmeldenummer: 23218342.6
(22) Anmeldetag: 19.12.2023
(51) Int. Cl.: B60P 3/12

(54) **KRAFTFAHRZEUG MIT LADEPLATTFORM**
MOTOR VEHICLE WITH LOADING PLATFORM
VÉHICULE AUTOMOBILE AVEC PLATE-FORME DE CHARGEMENT

(30) Priorität: 22.12.2022 DE 102022134655
(43) Veröffentlichungstag der Anmeldung: 26.06.2024
(73) Patentinhaber: Eder GmbH, 83104 Tuntenhausen (DE)
(72) Erfinder: Eder, Peter, 83104 Tuntenhausen (DE)
(74) Vertreter: noventive Patentanwaltsgesellschaft mbH

(56) Entgegenhaltungen:
- US-A- 4 318 658
- US-A- 4 556 357

## Beschreibung

Die Erfindung betrifft ein Kraftfahrzeug mit Ladeplattform, insbesondere ein Kraftfahrzeug zum Befördern von Fahrzeugen, sowie ein Verfahren zur Herstellung des erfindungsgemäßen Kraftfahrzeugs.

Aus dem Stand der Technik sind unterschiedliche Fahrzeuge zur Verwendung als Fahrzeugtransporter und zum Abschleppen liegengebliebener PKWs bekannt. Dabei werden die Fahrzeuge auf unterschiedliche Art und Weise auf die Ladeplattform gebracht. So werden im einfachsten Fall beispielsweise Rampen eingesetzt, die an die Ladeplattform des Fahrzeugtransporter montiert werden können und über die die zu transportierenden PKWs anschließend auf die Plattform gelangen.

Weiterhin sind Fahrzeuge mit Teleskop-Ausfahrrohren bekannt, an deren Ende umklappbare Brillenelemente mit Mulden zur Aufnahme von Rädern des zu bergenden Fahrzeugs installiert sind. Anhand der Teleskop-Ausfahrrohre können die Fahrzeuge je nach Ausführungsform vollständig oder nur teilweise, beispielsweise bis auf die Hinterräder, auf die Ladeplattform gehoben werden.

Weiterhin sind Fahrzeuge mit nach hinten verschiebbaren Ladeplattformen bekannt, welche, nach dem Verschieben zusätzlich gekippt werden können. Als weitere Alternative sind beispielsweise aus den Patentschriften DE 198 46 340 A1 oder DE 298 17 956 U1 sogenannte Knicktransporter bekannt, bei denen die Ladeplattform direkt, ohne Verschiebung in Längsrichtung des Fahrzeugs, geknickt werden kann. Die Ladeplattform kann somit in zwei Positionen gebracht werden. Befindet sich die Ladeplattform im weitestmöglich geknickten Zustand wird von einer Arbeitsposition gesprochen, während sich die Ladeplattform in einer Ruheposition befindet, wenn keine Knickung vorliegt und die Ladeplattform somit im Wesentlichen parallel zum Fahrbahnuntergrund angeordnet ist. In der Arbeitsposition kann das Fahrzeug über kleine ausfahrbare Rampen auf die Ladeplattform gefahren/gezogen werden und somit auf den Knicktransporter gelangen. Derartige Knicktransporter werden darüber hinaus auch in den Druckschriften US 4 318 658 A und US 4 556 357 A offenbart, wobei insbesondere die erstgenannte Druckschrift auch die Möglichkeit eines Umbaus eines bestehenden Transporters ohne Knickgelenk offenbart.

Derartige Knicktransporter werden als Kleinserie ausgehend von am Markt erhältlichen Transportern umgebaut. Nach den herkömmlichen Konstruktionen ist ein derartiger Umbau mit einem großen Aufwand verbunden, um sichere und funktionsfähige Fahrzeugtransporter herzustellen.

Aufgabe der Erfindung ist es somit ein alternatives Konzept eines Kraftfahrzeugs mit Ladeplattform und ein Verfahren zur Herstellung des Kraftfahrzeugs bereitzustellen, wobei das Kraftfahrzeug zumindest hinsichtlich Herstellung und Konstruktion Vorteile gegenüber dem Stand der Technik aufweist.

Diese Aufgabe wird durch die Gegenstände der unabhängigen Ansprüche gelöst. Vorteilhafte Ausbildungen der Erfindung sind dabei in den Unteransprüchen offenbart.

Das erfindungsgemäße Kraftfahrzeug weist eine Ladeplattform auf, sowie einen vorderen und einen hinteren Tragrahmen. Als Tragrahmen wird im Rahmen dieser Anmeldung das tragende Gerüst des Kraftfahrzeugs verstanden. Das Gerüst weist dabei sich von der Fahrerkabine in Längsrichtung des Fahrzeugs nach hinten erstreckenden Träger, insbesondere mit Querträgern und insbesondere aus Stahl, auf. Erfindungsgemäß ist der Tragrahmen des Kraftfahrzeugs also in einen vorderen Tragrahmen und einen hinteren Tragrahmen zweigeteilt. Der vordere und der hintere Tragrahmen sind über eine Gelenkvorrichtung miteinander verbunden, welche dazu ausgebildet ist, eine Knickbewegung des hinteren Tragrahmens zum vorderen Tragrahmen, um eine Drehachse parallel zur Kraftfahrzeugquerachse zu ermöglichen. Weiterhin weist das erfindungsgemäße Kraftfahrzeug einen Hubzylinder auf, der dazu ausgebildet ist, die Knickbewegung zwischen dem hinteren Tragrahmen und dem vorderen Tragrahmen auszuüben, also die entsprechend notwendige Kraft für die Knickbewegung zu stellen. Die Ladeplattform des Kraftfahrzeugs ist dabei fest mit dem hinteren Tragrahmen verbunden, sodass sie durch die Knickbewegung des hinteren Tragrahmens von einer Arbeitsposition in eine Ruheposition gebracht werden kann und umgekehrt. Als "fest verbunden" wird dabei eine im Betrieb des Kraftfahrzeugs unbewegliche Verbindung verstanden, die beispielsweise durch eine Steck-, Klemm-, oder Schraubverbindung umgesetzt ist. Ebenso ist eine stoffschlüssige Verbindung denkbar, allerdings geht eine irreversible (bspw. stoffschlüssige) Verbindung nicht zwangsweise mit einer festen Verbindung im Sinne der Anmeldung einher. Weiterhin weist sowohl der vordere als auch der hintere Tragrahmen jeweils wenigstens einen in Fahrzeuglängsrichtung angeordneten Träger auf, wobei die Träger des vorderen und hinteren Tragrahmens identische Querschnitte (Querschnittsprofile) aufweisen.

Vorzugsweise sind dabei der wenigstens eine Träger des vorderen Tragrahmens und der wenigstens eine Träger des hinteren Tragrahmens aufeinander stoßend angeordnet, sodass ihre Stirnflächen sich also gegenüberliegen. Eine Berührung des vorderen und hinteren Tragrahmens an ihren Stirnflächen ist dabei zwar möglich, aber nicht erforderlich. Als Stirnflächen werden dabei die in Längsrichtung der Träger stirnseitig angeordneten Flächen bezeichnet. Besonders vorteilhaft ist dabei eine Ausführungsform der Erfindung, bei der der hintere Tragrahmen im Vergleich zum vorderen Tragrahmen, also die entsprechenden Träger in Fahrzeuglängsrichtung geringfügig, bevorzugt im Bereich zwischen 3 und 50mm, in Richtung einer Fahrzeughochachse, also senkrecht auf den ebenen Fahrbahnbelag) nach oben versetzt ist. Durch den Versatz nach oben kann sichergestellt werden, dass die Ladeplattform in Ruheposition leicht vom vorderen Tragrahmen beabstandet ist und somit der Kontakt zwischen diesen Bauteilen lediglich an fest definierten und dafür vorgesehenen Stellen, wie beispielsweise einem konusförmigen Führungselement, vorliegt.

Zur Durchführung des erfindungsgemäßen Verfahrens zur Herstellung eines Kraftfahrzeugs wird zunächst ein Transporter bereitgestellt, welcher einen Tragrahmen aus wenigstens einem, vorzugsweise zwei sich in Längsrichtung des Fahrzeugs von der Führerkabine parallel erstreckenden Träger aufweist. Anschließend wird der Tragrahmen in einen vorderen Tragrahmen und einen hinteren Tragrahmen an einer Position zwischen einer Vorderachse des Fahrzeugs und wenigstens einer Hinterachse des Fahrzeugs getrennt. In einem weiteren Verfahrensschritt wird der vordere Tragrahmen und der hintere Tragrahmen durch eine Gelenkvorrichtung derart miteinander verbunden, dass der hintere Tragrahmen gegen den vorderen Tragrahmen abknickbar ist, wodurch die Träger des vorderen Tragrahmens und des hinteren Tragrahmens in diesem Zustand einen Winkel einschließen. Vorzugsweise wird dabei der hintere Tragrahmen zum vorderen Tragrahmen derart angeordnet, dass die entsprechenden Träger in der Ruheposition ohne Versatz in Fahrzeugquerrichtung (parallel zum Fahrbahnbelag) angeordnet sind. Besonders bevorzugt ist dabei eine Ausführungsform, bei der der hintere Tragrahmen im Vergleich zum vorderen Tragrahmen geringfügig, bevorzugt im Bereich zwischen 3 und 50mm, in Richtung einer Fahrzeughochachse, also senkrecht auf den ebenen Fahrbahnbelag nach oben versetzt angeordnet wird. Durch den Versatz nach oben kann sichergestellt werden, dass die Ladeplattform in Ruheposition leicht vom vorderen Tragrahmen beabstandet ist.

In weiteren Verfahrensschritten des erfindungsgemäßen Verfahrens wird eine Ladeplattform mit dem hinteren Tragrahmen fest verbunden und anschließend ein Hubzylinder derart installiert, dass dieser in der Lage ist eine Knickbewegung des hinteren Tragrahmens und des vorderen Tragrahmens auszuführen.

Der erfindungsgemäße Gegenstand erlaubt eine einfache Herstellung gemäß dem erfindungsgemäßen Verfahren ohne aufwändige Anpassung des Radstands oder von funktionswichtigen Fahrzeugsystemen wie beispielsweise dem Bremssystem oder dem Antriebsstrang ohne die Funktionsfähigkeit gegenüber den aus dem Stand der Technik bekannten Systemen zu verschlechtern.

In einer bevorzugten Ausführungsform der Erfindung weist der vordere Tragrahmen ein Stabilisationselement und der hintere Tragrahmen ein Stabilisationsgegenstück auf oder umgekehrt, wobei das Stabilisationselement und das Stabilisationsgegenstück dazu ausgebildet sind, in der Ruheposition der Ladeplattform derart ineinander zu greifen, dass Kräfte in wenigstens einer Querrichtung des Fahrzeugs vom vorderen Tragrahmen auf den hinteren Tragrahmen oder umgekehrt übertragen werden. Die Querrichtung des Fahrzeugs ist dabei jede Richtung, welche senkrecht auf die Fahrzeuglängsrichtung, also senkrecht zur Fahrtrichtung bei Geradeausfahrt des Fahrzeugs zeigt. Dabei ist insbesondere die Querrichtung eingeschlossen, welche zusammen mit der Fahrzeuglängsrichtung eine Ebene parallel zum Fahrbahnbelag orientiert ist. Durch eine derartige Ausführungsform mit Stabilisationselement und Stabilisationsgegenstück kann die Steifigkeit des gesamten Kraftfahrzeugs insbesondere bei Querbeschleunigungen durch beispielsweise Kurvenfahrten deutlich verbessert werden, da die Gelenkvorrichtung zwischen vorderem und hinterem Tragrahmen nicht sämtliche Kräfte in Querrichtung (Querkräfte) aufnehmen muss, sondern durch das Stabilisationselement entlastet wird. Dies trägt maßgeblich zu einem besseren Fahrkomfort und insbesondere zu einer besseren Fahrsicherheit bei.

In analoger Weise werden im erfindungsgemäßen Verfahren wenigstens ein entsprechendes Stabilisationselement bzw. wenigstens ein entsprechendes Stabilisationsgegenstück am vorderen bzw. hinteren Tragrahmen vorgesehen.

Weiterhin vorteilhaft ist eine Ausführungsform der Erfindung, bei der das Stabilisationselement als Blechelement ausgeführt ist und das

Stabilisationsgegenstück als eine entsprechend gegengleich geformte Tasche, welche dazu ausgebildet ist, das Blechelement in der Ruheposition der Ladeplattform aufzunehmen, sodass das Stabilisationsgegenstück das Blechelement, also das Stabilisationselement, in Querrichtung zum Kraftfahrzeug von beiden Seiten umschließt. In analoger Weise werden in einer bevorzugten Ausführungsform des erfindungsgemäßen Verfahrens derartige Elemente als Stabilisationselement bzw. Stabilisationsgegenstück angeordnet. Derartige Elemente sind einfach zu fertigen und installieren, wodurch der Fertigungsprozess einfach und damit kostengünstig gehalten werden kann.

Weiterhin vorteilhaft ist eine Ausführungsform der Erfindung, bei der die Gelenkvorrichtung durch eine vordere Knickkonsole am vorderen Tragrahmen und eine hintere Knickkonsole am hinteren Tragrahmen gebildet ist, wobei die vordere Knickkonsole und die hintere Knickkonsole über ein Gelenk miteinander verbunden sind, welches dazu ausgebildet ist, die Knickbewegung des hinteren Tragrahmens zum vorderen Tragrahmen zu ermöglichen. Insbesondere bevorzugt ist dabei, dass die beiden Knickkonsolen in der Ruheposition derartig angeordnet sind und in Kontakt stehen, dass die Knickbewegung lediglich in eine Richtung möglich ist und ein Abknicken in die andere Richtung durch den Kontakt der Knickkonsolen blockiert ist. Eine vorteilhafte Ausführungsform des erfindungsgemäßen Verfahrens weist dementsprechend den Verfahrensschritt der Anordnung derartiger Knickkonsolen auf. Diese haben den Vorteil, dass dadurch eine ungewollte Knickbewegung entgegen der Bewegungsrichtung beim Knicken aus der Ruheposition in die Arbeitsposition einfach unterbunden werden kann. Somit kann der Tragrahmen des Fahrzeugs bestehend aus vorderem und hinterem Tragrahmen seine Stabilität in Längsrichtung erhöhen, was insbesondere beim Überfahren entsprechender Unebenheiten die Fahrsicherheit und den Fahrkomfort erhöht.

Besonders bevorzugt ist dabei eine Ausführungsform, bei der das Stabilisationselement und das Stabilisationsgegenstück durch entsprechende Elemente an der vorderen Knickkonsole und der hinteren Knickkonsole umgesetzt werden, sodass das Stabilisationselement und das Stabilisationsgegenstück in der vorderen Knickkonsole bzw. der hinteren Knickkonsole integriert sind.

In einer weiterhin bevorzugten Ausführungsform der Erfindung weist das Kraftfahrzeug eine Feststellbremse mit einem Seilzug auf, welcher von einer Fahrerkabine zu wenigstens einer Achse, insbesondere einer Hinterachse, des Kraftfahrzeugs führt. Als Feststellbremse wird im Rahmen dieser Anmeldung eine Bremse verstanden, anhand welcher Räder, insbesondere Hinterräder dauerhaft blockiert werden können. Derartige Feststellbremsen sind im Stand der Technik bekannt und werden umgangssprachlich auch als Handbremse bezeichnet, wobei ebenfalls Ausführungsformen bekannt sind, bei denen die Bremse durch eine Fußbetätigung aktiviert wird. Bei derartigen Feststellbremsen erfolgt üblicherweise die Kraftübertragung von einem Betätigungselement in der Fahrerkabine über einen Seilzug an den eigentlichen Bremsaktuator, der die entsprechenden Räder blockiert. In der vorteilhaften Ausführungsform der Erfindung wird der Seilzug über ein Umlenkelement, insbesondere eine Umlenkrolle geführt, welches an einem Gestell angeordnet ist, das in Längsrichtung des Kraftfahrzeugs beweglich am hinteren Tragrahmen und um eine Querachse des Kraftfahrzeugs an dem vorderen Tragrahmen drehbar gelagert angeordnet ist. Dabei ist ein Bowdenzug an dem in Längsrichtung des Kraftfahrzeugs hinteren Ende mit dem Gestell verbunden, der das Zugseil des Seilzugs von dort zum Bremsaktuator führt. Auf diese Weise kann sichergestellt werden, dass durch eine Knickbewegung der Ladeplattform der Seilzug nicht gelängt wird und möglicherweise reist. In einer vorteilhaften Ausführungsform des erfindungsgemäßen Verfahrens wird in einem Verfahrensschritt ein dementsprechendes Gestell mit Umlenkrolle und entsprechender Lagerung analog zur in diesem Absatz beschriebenen vorteilhaften Ausführungsform der erfindungsgemäßen Vorrichtung installiert.

Insbesondere bevorzugt ist eine derartige Ausführungsform der erfindungsgemäßen Vorrichtung, wenn das Gestell anhand eines am Gestell angeordneten Stabs, welcher dazu ausgebildet ist, in einer am hinteren Tragrahmen angeordneten Führung zu gleiten, in Längsrichtung des Kraftfahrzeugs beweglich an dem hinteren Tragrahmen angeordnet ist. Dies stellt eine einfache Befestigung und Lagerung des Gestells am hinteren Tragrahmen dar, bei der die Beweglichkeit des Gestells in Längsrichtung des Fahrzeugs gegeben ist.

Weiterhin bevorzugt ist eine Ausführungsform der Erfindung, bei der der vordere Tragrahmen wenigstens ein, insbesondere konusförmiges, Führungselement aufweist, welches dazu ausgebildet ist, in der Ruheposition der Ladeplattform in ein entsprechend gegengleich geformtes Führungsgegenelement, welches am abknickbaren Teil des Kraftfahrzeugs angeordnet ist, einzugreifen. Der abknickende Teil des Kraftfahrzeugs umfasst dabei die Ladeplattform und den hinteren Tragrahmen sowie gegebenenfalls einen Aufbaurahmen, welcher zur Befestigung der Ladeplattform auf dem hinteren Tragrahmen in manchen Ausführungsformen der Erfindung vorgesehen sein kann. Durch das Zusammenspiel des Führungselements und des Führungsgegenelements kann in der Ruheposition der Ladeplattform, also im nicht abgeknickten Zustand des Kraftfahrzeugs eine zusätzliche Stabilität in der aus Fahrzeuglängs- und Fahrzeugquerrichtung aufgespannten Ebene sichergestellt werden. Zudem wird durch ein insbesondere konusförmiges Führungselement der abknickbare Teil beim Überführen von der Arbeitsposition in die Ruheposition insbesondere gegen Ende der Bewegung geführt, sodass die korrekte Ruheposition sichergestellt werden kann. Selbstverständlich kann ein gleicher Vorteil auch mit anders geformten Führungselementen erzielt werden. Es ist dabei ebenfalls denkbar, das Führungselement am abknickbaren Teil des Fahrzeugs und das Führungsgegenelement am ersten Tragrahmen vorzusehen.

Eine vorteilhafte Ausführungsform des erfindungsgemäßen Verfahrens weist demensprechend den Verfahrensschritt auf ein derartiges Führungselement und Führungsgegenelement an den entsprechenden Positionen vorzusehen.

Eine Ausführungsform des erfindungsgemäßen Kraftfahrzeugs mit einem Führungselement bzw. einem Führungsgegenelement ist insbesondere dann vorteilhaft, wenn zwischen dem Führungselement und dem Führungsgegenelement ein reversibel verformbares Material wie beispielsweise Gummi angeordnet ist und die Trajektorie der Knickbewegung der Ladeplattform, insbesondere durch eine Kippschere, derart definiert ist, dass beim Knicken der Ladeplattform von der Arbeitsposition in die Ruheposition ein Kraftmaximum überschritten wird, in dem das Führungselement stärker in das Führungsgegenelement gedrückt wird, als in der finalen Ruheposition. Ausgehend von der Position des Kraftmaximums muss also in beide Bewegungsrichtungen weniger Kraft aufgebracht werden, um die Bewegung in die entsprechende Richtung fortzusetzen. Eine derartige Kinematik ist beispielsweise von Bügelverschlussflaschen bekannt, um ein unbeabsichtigtes Öffnen der Bügelflasche zu verhindern. Analog dazu wird durch diese vorteilhafte Ausführungsform der Erfindung sichergestellt, dass die Knickbewegung nicht unbeabsichtigt und ohne Kraftstellung durch den Hubzylinder erfolgt.

In analoger Weise weist eine vorteilhafte Ausführungsform des erfindungsgemäßen Verfahrens die Anordnung eines reversibel verformbaren Materials zwischen Führungselement und Führungsgegenelement auf sowie die Definition einer entsprechenden Bewegungstrajektorie, insbesondere durch die Verwendung einer Kippschere, bei der Durchführung der Knickbewegung von der Arbeitsposition in die Ruheposition oder andersrum.

Weiterhin weist das erfindungsgemäße Kraftfahrzeug eine Kardanwelle mit einem Kardanwellengelenk auf, wobei die Drehachse der Gelenkvorrichtung in Längsrichtung des Kraftfahrzeugs auf Höhe des Kardanwellengelenks angeordnet ist. In einer analogen Weise weist das erfindungsgemäße Verfahren den Verfahrensschritt auf, die Drehachse an einer entsprechenden Position zu positionieren.

An dieser Stelle sei darauf hingewiesen, dass die Merkmale zur Definition einer vorteilhaften Ausführungsform der erfindungsgemäßen Vorrichtung hiermit ebenfalls als Merkmale zur Definition einer vorteilhaften Ausführungsform des erfindungsgemäßen Verfahrens offenbart sind.

Im Folgenden werden vorteilhafte Aspekte und Ausführungsformen der vorliegenden Erfindung unter Bezugnahme auf die beiliegenden Figuren näher erläutert. Die Figuren zeigen:
- Fig. 1a: zeigt eine schematische Seitenansicht einer ersten erfindungsgemäßen Ausführungsform eines Kraftfahrzeugs 1 im nicht abgeknickten Zustand
- Fig. 1b: zeigt eine schematische Seitenansicht der ersten erfindungsgemäßen Ausführungsform des Kraftfahrzeugs 1 in einem abgeknickten Zustand
- Fig. 2a: zeigt eine Detailansicht einer Gelenkvorrichtung 11 der ersten Ausführungsform der Erfindung im nicht abgeknickten Zustand
- Fig. 2b: zeigt eine Detailansicht der Gelenkvorrichtung 11 der ersten Ausführungsform der Erfindung im abgeknickten Zustand
- Fig. 3a: zeigt eine Detailansicht einer Feststellbremsenvorrichtung 15 der ersten Ausführungsform der Erfindung im nicht abgeknickten Zustand
- Fig. 3b: zeigt eine Detailansicht der Feststellbremsenvorrichtung 15 der ersten Ausführungsform der Erfindung im abgeknickten Zustand

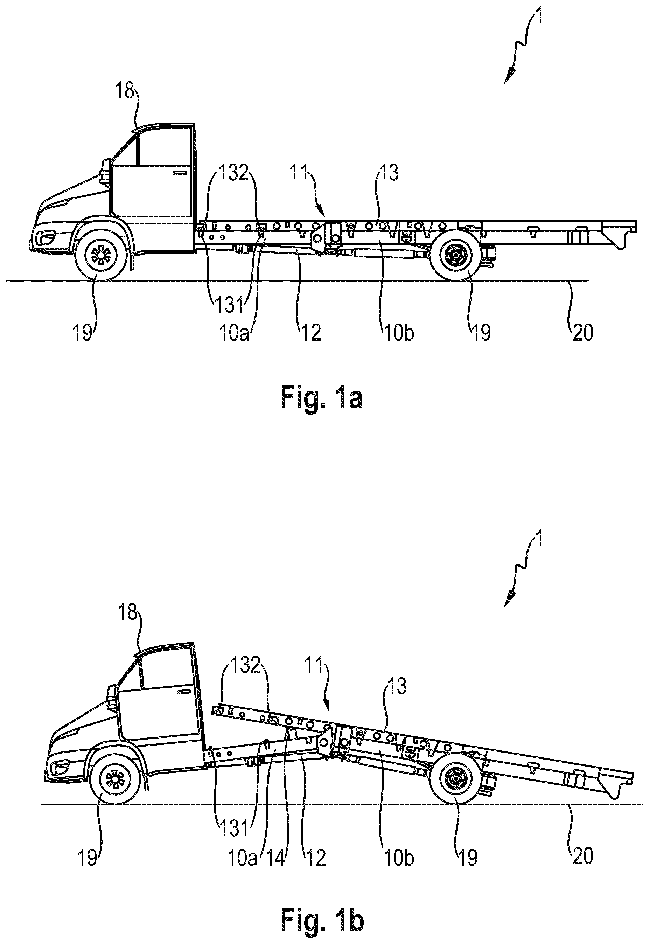

Die **Figs. 1a** und **1b** zeigen jeweils eine Seitenansicht einer ersten erfindungsgemäßen Ausführungsform eines Kraftfahrzeugs 1 in der Seitenansicht. Dabei zeigt Fig. 1a das Kraftfahrzeug 1 in einem nicht abgeknickten und Fig. 1b in einem abgeknickten Zustand. Das Kraftfahrzeug 1 weist dabei eine Fahrerkabine 18 und eine Ladeplattform auf, welche auf einem Aufbaurahmen 13 fest befestigt ist. Das Kraftfahrzeug 1 weist in dieser Ausführungsform weiterhin zwei Achsen mit daran entsprechend angeordneten Rädern 19 auf, welche im Fall der Hinterräder als Zwillingsräder ausgeführt sein können. Weiterhin weist das Kraftfahrzeug 1 einen zweigeteilten Tragrahmen auf, der sich aus einem vorderen Tragrahmen 10a und einem hinteren Tragrahmen 10b zusammensetzt.

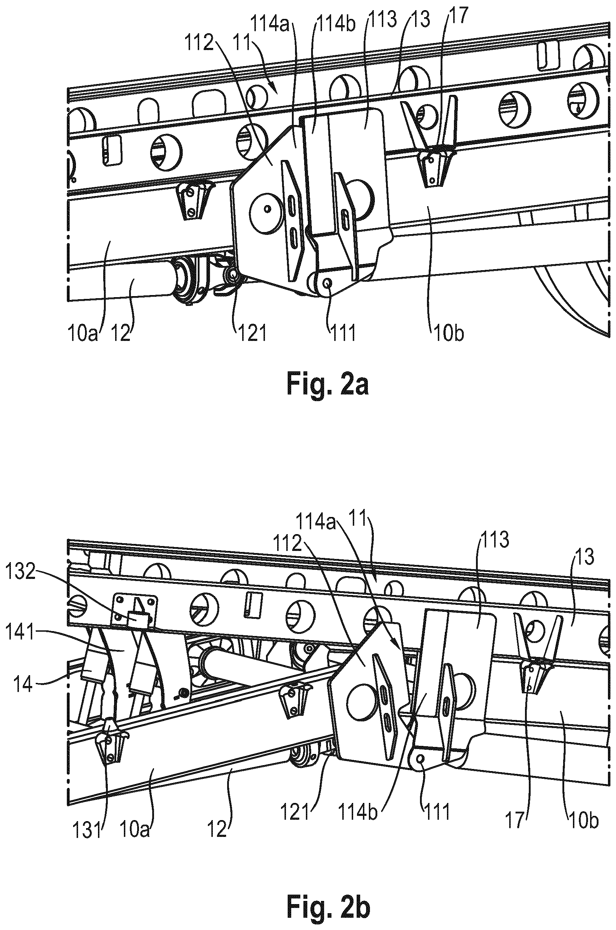

Sowohl der vordere Tragrahmen 10a als auch der hintere Tragrahmen 10b setzen sich im Wesentlichen aus zwei parallel in Fahrzeuglängsrichtung angeordneten Trägern zusammen, welche durch Querverbindungen miteinander verbunden sind. Der vordere Tragrahmen 10a reicht dabei unter die Fahrerkabine 18 und ist fest mit dieser verbunden. Erfindungsgemäß weisen die Träger des vorderen Tragrahmens 10a und die Träger des hinteren Tragrahmens 10b das gleiche Querschnittsprofil auf. In der vorliegenden Ausführungsform sind dabei die Träger des vorderen Tragrahmens 10a und des hinteren Tragrahmens 10b aufeinanderstoßend angeordnet und nicht seitlich versetzt zueinander. Auf diesen Punkt wird weiterhin in Bezug auf Figs. 2a und 2b eingegangen.

Der Aufbaurahmen 13 ist fest mit dem hinteren Tragrahmen 10b verbunden. Es sind ebenfalls Ausführungsformen der Erfindung denkbar, bei denen die Ladeplattform direkt mit dem hinteren Tragrahmen 10b verbunden ist, also kein Aufbaurahmen 13 vorgesehen ist, oder aber die Ladeplattform bereits im Aufbaurahmen 13 integriert ist.

Zwischen dem vorderen Tragrahmen 10a und dem hinteren Tragrahmen 10b ist eine Gelenkvorrichtung 11 angeordnet anhand derer der hintere Tragrahmen 10b gegen den vorderen Tragrahmen 10a um eine Drehachse, welche sich in Fahrzeugquerrichtung parallel zum Fahrbahnbelag 20 erstreckt, abgeknickt werden kann (siehe Fig. 1b). Durch das Abknicken des hinteren Tragrahmens 10b hebt sich der Aufbaurahmen 13 mit der Ladeplattform vom vorderen Tragrahmen 10a ab und wird gegenüber dem Fahrbahnbelag 20 geneigt.

Die in Fig. 1a dargestellte Ruheposition ist dadurch gekennzeichnet, dass die Ladeplattform sich im Wesentlichen parallel zum Fahrbahnbelag 20 erstreckt, und somit auch die Träger des vorderen Tragrahmens 10a parallel zu den Trägern des hinteren Tragrahmens 10b angeordnet sind, also der Tragrahmen nicht abgeknickt ist. Die in Fig. 1b dargestellte Arbeitsposition der Ladeplattform hingegen ist durch den zum vorderen Tragrahmen 10a abgeknickten hinteren Tragrahmen 10b gekennzeichnet, wodurch die Ladeplattform nicht länger parallel zum Fahrbahnbelag 20 angeordnet ist. Die Knickbewegung wird dabei durch einen Hubzylinder 14 durchgeführt.

Zusätzlich weist der vordere Tragrahmen 10a Führungselemente 131 auf, welche in der Ruheposition der Ladeplattform in entsprechend am Aufbaurahmen 13 angeordnete Führungsgegenelemente 132 greift, um die richtige Position der Ladeplattform sicherzustellen. Das Kraftfahrzeug 1 weist weiterhin eine Kardanwelle 12 mit einem Kardanwellengelenk 121 auf, wobei sich die Drehachse der Gelenkvorrichtung 11 in Fahrzeuglängsrichtung auf Höhe des Kardanwellengelenks 121 befindet.

Zur Durchführung der Abknickbewegung werden dabei zunächst die Hinterräder durch eine Feststellbremse blockiert und das Kraftfahrzeug in den Leerlauf geschalten, sodass motorseitig keine Blockierung der Räder vorliegt. Anschließend wird durch den Hubzylinder 14 der Aufbaurahmen 13 gegen den vorderen Tragrahmen 10a angehoben, wodurch sich aufgrund der festen Verbindung zwischen Aufbaurahmen 13 und hinterem Tragrahmen 10b der hintere Tragrahmen 10b um die Drehachse der Gelenkvorrichtung 11 dreht und so gegen den vorderen Tragrahmen 10a abknickt. Durch die Anordnung der Drehachse auf Höhe des Kardanwellengelenks 121 ergibt sich keine Längenänderung in den Abschnitten der Kardanwelle 12.

Während des Abknickens vollziehen die Führerkabine 18 und entsprechend die Vorderräder aufgrund der gezogenen Feststellbremse eine Bewegung in Richtung der Hinterachse. Die maximal abgeknickte Position, welche die Arbeitsposition der Ladeplattform definiert, wird dabei durch die Hublänge des Hubzylinders 14 bzw. durch das Aufsetzen des hinteren Tragrahmens 10b (rückwärtiges Ende des Kraftfahrzeugs 1) auf dem Fahrbahnbelag 20 festgelegt. Dementsprechend sollte, um Beschädigungen zu vermeiden, der Hub des Hubzylinders 14 derart eingestellt sein, dass die Abknickbewegung beendet ist, wenn der hintere Tragrahmen 10b den Fahrbahnbelag 20 berührt. Die Hubbewegung kann dazu beispielsweise mechanisch begrenzt sein oder aber durch ein entsprechendes Sensorsignal beendet werden. In dieser Position wird nun eine Rampe ausgefahren, welche es erlaubt ein zu bergendes Fahrzeug auf die Ladeplattform des Kraftfahrzeugs 1 zu fahren bzw. beispielsweise mit Hilfe einer Seilwinde zu ziehen. Befindet sich das zu bergende Fahrzeug auf der Ladeplattform wird diese wieder anhand des Hubzylinders 14 in die waagerechte Ruheposition gebracht. In dieser Position der Ladefläche kann das Fahrzeug vom Kraftfahrzeug 1 transportiert werden.

Zur Herstellung des Kraftfahrzeugs 1 wird zunächst ein Transporter mit einem entsprechenden Fahrgestell, also insbesondere einem entsprechenden Tragrahmen bereitgestellt. Anschließend wird der Tragrahmen auf Höhe des Kardanwellengelenks 121 getrennt und mittels der Gelenkvorrichtung 11 wieder miteinander derart verbunden, dass die Träger des vorderen und des hinteren Tragrahmens im nichtabgeknickten Zustand des Kraftfahrzeugs 1 aufeinanderstoßen und sich parallel zum Fahrbahnbelag 20 erstrecken. Zusätzlich wird die Ladeplattform mittels eines Aufbaurahmens 13 am hinteren Tragrahmen 10b befestigt und ein Hubzylinder 14 zwischen dem vorderen Tragrahmen 10a und dem Aufbaurahmen 13 so angeordnet, dass er die Knickbewegung des hinteren Tragrahmens 10b zum vorderen Tragrahmen 10a durchführen kann.

Die **Figs. 2a** und **2b** zeigen eine Detailansicht der Gelenkvorrichtung 11 in der in den Figs. 1a und 1b gezeigten Ausführungsform der Erfindung. Fig. 2a zeigt dabei die Gelenkvorrichtung 11 in einem nichtabgeknickten Zustand der Gelenkvorrichtung 11 und des Kraftfahrzeugs 1 während die Fig. 2b den abgeknickten Zustand der Gelenkvorrichtung 11 veranschaulicht. An dem vorderen Tragrahmen 10a ist eine vordere Knickkonsole 112 angeordnet, während an dem hinteren Tragrahmen 10b eine der vorderen Knickkonsole 112 gegenüber liegende hintere Knickkonsole 113 angeordnet ist. Die Knickkonsolen 112, 113 weisen ein Gelenk 111 auf, welches sie und damit auch den hinteren Tragrahmen 10b zum vorderen Tragrahmen 10a um eine Drehachse in Fahrzeugquerrichtung drehbar lagert. Das Gelenk 111 ist dabei unterhalb des vorderen Tragrahmens 10a und hinteren Tragrahmens 10b angeordnet. Knicken somit die beiden Tragrahmen ab entfernen sich die beiden in der Ruheposition aufeinanderstoßenden (aber nicht zwangsweise berührenden) Enden der Tragrahmen voneinander und das Abknicken kann kollisionsfrei gewährleistet werden.

Die vordere Knickkonsole 112 weist zudem ein Stabilisationselement 114a auf, welches in der Ruheposition mit einem an der hinteren Knickkonsole 113 angeordneten Stabilisationsgegenstück 114b in Eingriff steht. Das Stabilisationselement 114a ist in der gezeigten Ausführungsform als Blechüberstand ausgebildet, der in eine durch die hintere Knickkonsole 113 und einem daran angeordneten Blech gebildeten Tasche als Stabilisationsgegenstück 114b eingreift. Das Stabilisationselement114a ist dabei so ausgeführt, dass es seitlich mit dem Stabilisationsgegenstück 114b in Kontakt steht und so Querkräfte vom vorderen Tragrahmen 10a zum hinteren Tragrahmen übertragen werden können.

Das Stabilisationselement 114a führt insbesondere dazu, dass das Gelenk 111 insbesondere bei der Übertragung der Querkräfte entlastet wird und somit die Fahrsicherheit und der Fahrkomfort deutlich erhöht werden kann. Zudem verringert sich auf diese Weise ebenfalls der Verschleiß des Gelenks 111, wodurch eine längere Lebensdauer und eine Verringerung der Wartungsarbeiten erzielt werden können.

Die Träger des vorderen Tragrahmens 10a und des hinteren Tragrahmens 10b sind dabei in Richtung der Fahrzeughochachse leicht versetzt, sodass der hintere Tragrahmen 10b gegenüber dem vorderen Tragrahmen 10a leicht höher angeordnet ist. Dadurch wird erreicht, dass im nicht abgeknickten Zustand der Aufbaurahmen 13 ebenfalls leicht erhöht gegenüber dem vorderen Tragrahmen 10a angeordnet ist und nicht auf diesem schleift bzw. aufliegt. Vielmehr liegt der Aufbaurahmen 13 mit den daran entsprechend angeordneten Führungsgegenstücken 132 lediglich an den dafür vorgesehenen Führungselementen 131 am vorderen Tragrahmen 10a auf. In Fig. 2b ist das am vorderen Tragrahmen 10a angeordnete konusförmige Führungselement 131 zu erkennen, welches in der Ruheposition in ein entsprechend am Aufbaurahmen 13 vorgesehenes Führungsgegenstück 132 eingreift. In der gezeigten Ausführungsform weist dabei das Führungsgegenstück 132 auf seiner Innenseite ein reversibel verformbares Material auf, in welches das Führungselement 131 gedrückt wird.

Weiterhin sind in Fig. 2b zwei Kippscheren 141 zu erkennen, welche jeweils einen Hubzylinder 14 zwischen ihren Seitenteilen aufnehmen. Es ist dabei ebenso eine Ausführungsform mit einer Kippschere 141 und einem entsprechend starken Hubzylinder 14 denkbar. Die Kippschere 141 stützt dabei den Hubzylinder 14, definiert dessen maximalen Hub und definiert zusätzlich den aufzubringenden Kraftaufwand bei der Bewegung von der Ruheposition in die Arbeitsposition und umgekehrt. Das Funktionsprinzip ist dabei ähnlich wie bei einer Bügelflasche, wobei die Kippscheren als "Drahtfeder" fungiert. Durch die Kippscheren 141 wird erzielt, dass der Hubzylinder 14 beim Durchlauf der Bewegung von einer in die andere Position einen Punkt der maximal aufzuwendenden Kraft überbrücken muss. Dieser Punkt kann auch als Kraftmaximum bezeichnet werden. Wird dieser Punkt überschritten muss weniger Kraft aufgewendet werden als vor diesem Punkt. Auf diese Weise kann eine zusätzliche Sicherheit erzielt werden, dass keine ungewollte Bewegung aus der Ruheposition erfolgt.

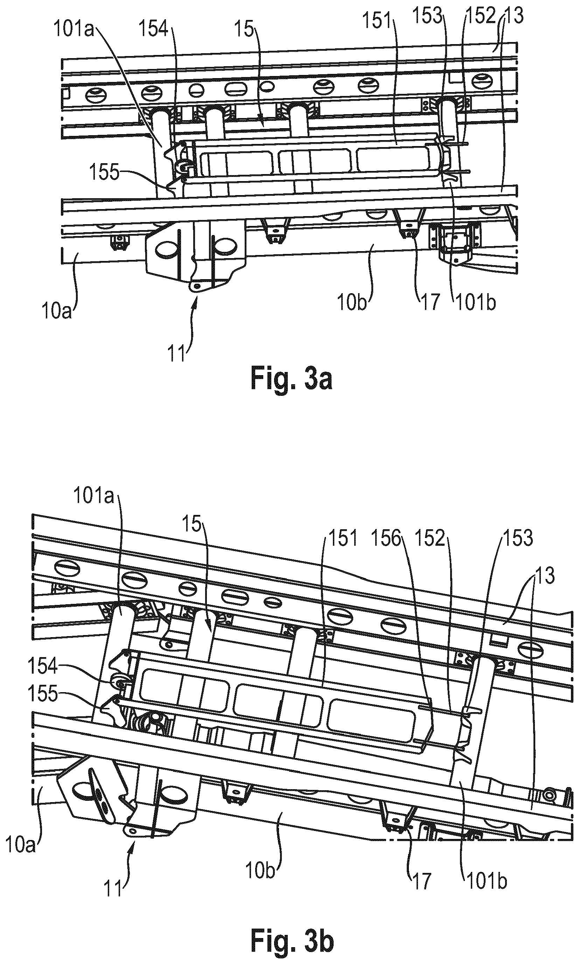

Die **Figs. 3a** und **3b** zeigen eine Detailansicht einer Feststellbremsenvorrichtung 15 in einem abgeknickten und einem unabgeknickten Zustand des Kraftfahrzeugs 1. Feststellbremsen weisen üblicherweise einen Seilzug auf, welcher die Betätigung aus der Fahrerkabine 18 auf die zu blockierenden Räder 19, insbesondere die Hinterräder, überträgt. Der Seilzug verläuft dabei üblicherweise im Endbereich als Bowdenzug. Beim Bowdenzug wird das Zugseil des Seilzugs durch eine Ummantelung (Bowdenzughülle), bspw. aus Kunststoff, mit einer gewissen Steifigkeit geführt, sodass das Zugseil räumlich geführt wird und nicht ausschließlich zwei Punkte auf einer geraden Linie verbindet. Somit kann das Zugseil in der Bowdenzughülle in einem Bogen bzw. einer S-förmigen Form (unter Einhaltung eines maximalen Biegeradius) verlaufen und Bewegung zwischen den Befestigungspunkten, also Endpunkten des Bowdenzugs, ausgleichen, ohne dass es zu einer Längenänderung des Zugseils kommt. Der Bowdenzug ist dabei im Stand der Technik vorgesehen, um beim Einfedern der Hinterachse und die damit einhergehende Bewegung auszugleichen, um ein Reißen des Seilzugs zu verhindern. Beide Enden des Bowdenzugs müssen dabei fest eingespannt sein. Dazu wird der Bowdenzug an einem fest definierten Punkt am Tragrahmen des Fahrzeugs, meist ein Querträger, und dem Bremsaktuator befestigt, wobei das Zugseil in diesem Punkt in die Bowdenzughülle eingeführt wird. Der Bowdenzug führt also das Zugseil vom Befestigungspunkt am Querträger bis zum Bremsaktuator und weist dabei eine S-Form auf.

Durch die Knickbewegung des erfindungsgemäßen Fahrzeugs verändert sich der Abstand zwischen Fahrerkabine 18 und dem Befestigungspunkt des Bowdenzugs. Durch das "Zurückfahren" der Vorderachse (siehe Fig. 1b) während des Abknickvorgangs wird die Distanz zwischen Fahrerkabine 18 und Befestigungspunkt reduziert, weshalb das Zugseil nicht auf Spannung gehalten werden kann und die Bremswirkung an der Hinterachse nachlässt und somit das Fahrzeug nicht mehr fixiert auf dem Fahrbahnbelag 20 fixiert ist, was aus sicherheitstechnischen Gründen zu vermeiden ist.

Aus diesem Grund ist eine Führung des Zugseils unausweichlich, welche eine Spannung auf dem Zugseil und damit die Fixierung des Fahrzeugs auch im geknickten Zustand des Kraftfahrzeugs sicherstellt. Dabei muss darauf geachtet werden, dass durch den Knickvorgang die Strecke zwischen Fahrerkabine und Befestigungspunkt des Bowdenzugs, welche durch das Zugseil durch eine einfache Führung am vorderen Tragrahmen 10a bzw. hinteren Tragrahmen 10b überbrückt wird, im geknickten Zustand länger ist als im ungeknickten Zustand. Durch diese verlängerte Strecke müsste sich das Zugseil längen, wozu es jedoch aufgrund seines Verwendungszwecks nicht ausgelegt werden kann und somit die Gefahr besteht, dass das Zugseil reist.

Um dies zu verhindern ist in der gezeigten Ausführungsform die Feststellbremsenvorrichtung 15 vorgesehen. Diese weist ein Gestell 151 auf, welches auf der einen Seite um eine Querachse drehbar an einem vorderen Querträger 101a zwischen den Trägern in Fahrzeuglängsrichtung des vorderen Tragrahmens 10a angeordnet ist. Auf der anderen hinteren Seite ist das Gestell 151 an einem hinteren Querträger 101b, des hinteren Tragrahmens 10b derart befestigt, dass es sich in Längsrichtung des Kraftfahrzeugs 1 bewegen kann. Dies wird durch zwei am Gestell 151 angeordnete Stäbe 152 erreicht, welche in einer Führung 152 auf dem hinteren Querträger 101b gleiten können. Am in Fahrtrichtung hinteren Ende (in Zeichenebene rechts) des Gestells 151 ist der Befestigungspunkt 156 des Bowdenzugs vorgesehen, welcher das Zugseil von dort zum Bremsaktuator an der Hinterachse führt. Bei Ausführungsformen gemäß dem Stand der Technik erfolgt die Befestigung des Bowdenzugs hingegen am hinteren Querträger 101b selbst. Weiterhin weist die Feststellbremsenvorrichtung 15 eine Umlenkrolle 154 am in Fahrtrichtung vorderen Ende des Gestells 151 auf über die das Zugseil geführt wird.

Knickt der Transporter um das Gelenk 111 der Gelenkvorrichtung 11 ab, wird das Zugseil ebenfalls durch die Umlenkrolle 154 umgelenkt. Das Gestell 151 ändert dabei durch die drehbare Lagerung am vorderen Tragrahmen 10a den Winkel zu diesem und wird dabei, wie in Fig. 3b dargestellt, über die Linearführung der Stäbe 152 in der Führung 153 vom hinteren Querträger 101b entfernt, wodurch sich der daran befestigte Bowdenzug aus seiner ursprünglichen Form etwas streckt, um so die länger gewordene Distanz zwischen Befestigungspunkt 156 zum Bremsaktuator im abgeknickten Zustand zu überbrücken. Unter "strecken" ist dabei zu verstehen, dass die S-förmige Form des Bowdenzugs etwas in die Länge gezogen wird. Die vom Zugseil bis zum Befestigungspunkt des Bowdenzugs zu überbrückende Strecke bleibt dabei konstant, wodurch die Gefahr, dass das Zugseil reist minimiert werden kann. Die Längenänderung wird also durch die Verformung bzw. Streckung des Bowdenzugs während des Knickvorgangs ausgeglichen.

Weiterhin sind Ausführungsformen der Erfindung denkbar, bei denen der Seilzug kurz vor dem Befestigungspunkt 156 über einen Waagebalken auf zwei Stränge aufgeteilt wird. Beide Stränge gehen jeweils in einen am Gestell 151 im Befestigungspunkt 156 angeordneten Bowdenzug über, wobei diese Bowdenzüge die darin geführten Stränge des Zugseils zu den Bremsaktuatoren auf der rechten und linken Seite der Hinterachse führen. Durch den Waagebalken kann dabei erreicht werden, dass ungleichmässig abgefahrene Bremse ausgeglichen werden und die Kraft der Feststellbremse trotzdem gleichmässig auf beide Bremsaktuatoren verteilt werden kann.

### BEZUGSZEICHENLISTE

- 1: Knicktransporter
- 10a: vorderer Tragrahmen
- 10b: hinterer Tragrahmen
- 101a: vorderer Querträger
- 101b: hinterer Querträger
- 11: Gelenkvorrichtung
- 111: Gelenk
- 112: vordere Knickkonsole
- 113: hintere Knickkonsole
- 114a: Stabilisationselement
- 114b: Stabilisationsgegenstück
- 12: Kardanwelle
- 121: Kardanwellengelenk
- 13: Aufbaurahmen
- 131: Führungselement
- 132: Führungsgegenelement
- 14: Hubzylinder
- 141: Kippschere
- 15: Feststellbremsenvorrichtung
- 151: Gestell
- 152: Stab
- 153: Führung
- 154: Umlenkrolle
- 155: Gestellbefestigung
- 156: Befestigungspunkt
- 17: Befestigungskonsole
- 18: Fahrerkabine
- 19: Rad
- 20: Fahrbahnbelag

## Patentansprüche

1. Kraftfahrzeug (1) mit einer Ladeplattform, aufweisend
einen vorderen Tragrahmen (10a) und einen hinteren Tragrahmen (10b), welche über eine Gelenkvorrichtung (11) miteinander verbunden sind, die dazu ausgebildet ist, eine Knickbewegung des hinteren Tragrahmens (10b) zum vorderen Tragrahmen (10a) um eine Drehachse zu ermöglichen,
einen Hubzylinder (14), dazu ausgebildet die Knickbewegung zwischen dem hinteren Tragrahmen (10b) und dem vorderen Tragrahmen (10a) auszuüben,
wobei die Ladeplattform mit dem hinteren Tragrahmen (10b) fest verbunden ist und so durch die Knickbewegung von einer Arbeitsposition in eine Ruheposition und umgekehrt bewegbar ist,
wobei der vordere Tragrahmen (10a) und der hintere Tragrahmen (10b) jeweils wenigstens einen in Fahrzeuglängsrichtung angeordneten Träger aufweisen, wobei die Träger identische Querschnitte aufweisen,
**dadurch gekennzeichnet, dass**
das Kraftfahrzeug (1) eine Kardanwelle (12) mit einem Kardanwellengelenk (121) aufweist, wobei die Drehachse der Gelenkvorrichtung (11) in Längsrichtung des Kraftfahrzeugs (1) auf Höhe des Kardanwellengelenks (121) angeordnet ist.

2. Kraftfahrzeug (1) gemäß dem vorhergehenden Anspruch, wobei der vordere Tragrahmen (10a) ein Stabilisationselement (114a) und der hintere Tragrahmen (10b) ein Stabilisationsgegenstück (114b) oder umgekehrt aufweisen, wobei Stabilisationselement (114a) und Stabilisationsgegenstück (114b) dazu ausgebildet sind, in der Ruheposition der Ladeplattform derart ineinander zu greifen, dass Kräfte in wenigstens einer Querrichtung des Kraftfahrzeugs (1) vom vorderen Tragrahmen (10a) auf den hinteren Tragrahmen (10b) oder umgekehrt übertragen werden.

3. Kraftfahrzeug (1) gemäß dem vorhergehenden Anspruch, wobei das Stabilisationselement (114a) als ein Blechelement ausgeführt ist und das Stabilisationsgegenstück (114b) als eine entsprechend gegengleich geformte Tasche ausgeführt ist, welche dazu ausgebildet ist das Blechelement in der Ruheposition der Ladeplattform aufzunehmen, sodass das Stabilisationsgegenstück (114b) das Blechelement in Querrichtung zum Kraftfahrzeug (1) von beiden Seiten umschließt.

4. Kraftfahrzeug (1) gemäß einem der vorhergehenden Ansprüche, wobei die Gelenkvorrichtung (11) durch eine vordere Knickkonsole (112) an dem vorderen Tragrahmen (10a) und eine hintere Knickkonsole (113) an dem hinteren Tragrahmen (10b) gebildet ist, wobei die vordere Knickkonsole (112) und die hintere Knickkonsole (113) über ein Gelenk (111) miteinander verbunden sind, welches dazu ausgebildet ist, die Knickbewegung des hinteren Tragrahmens (10b) zum vorderen Tragrahmen (10a) zu ermöglichen.

5. Kraftfahrzeug (1) gemäß dem vorhergehenden Anspruch in Verbindung mit einem der vorhergehenden Ansprüche 2 oder 3, wobei das Stabilisationselement (114a) und das Stabilisationsgegenstück (114b) an der vorderen Knickkonsole (112) bzw. der hinteren Knickkonsole (113) angeordnet sind.

6. Kraftfahrzeug (1) gemäß einem der vorhergehenden Ansprüche, wobei das Kraftfahrzeug (1) eine Feststellbremse mit einem Seilzug, welcher von einer Fahrerkabine (18) zu einer Hinterachse des Kraftfahrzeugs (1) geführt ist, aufweist und weiterhin eine Feststellbremsenvorrichtung (15) vorgesehen ist, welche den Seilzug über ein Umlenkelement, insbesondere eine Umlenkrolle (154), führt, welches an einem Gestell (151) angeordnet ist, das in Längsrichtung des Kraftfahrzeugs (1) beweglich am hinteren Tragrahmen (10b) und um eine Querachse des Kraftfahrzeugs an dem vorderen Tragrahmen (10a) drehbar gelagert angeordnet ist, wobei ein Bowdenzug an der in Längsrichtung des Kraftfahrzeugs (1) hinteren Ende mit dem Gestell (15) verbunden ist und den Seilzug zu einem durch die Feststellbremse zu betätigenden Bremsaktuator führt.

7. Kraftfahrzeug (1) gemäß dem vorhergehenden Anspruch, wobei das Gestell (151) anhand eines am Gestell (151) angeordneten Stabs (153), welcher dazu ausgebildet ist, in einer am hinteren Tragrahmen (10b) angeordneten Führung (153) zu gleiten, in Längsrichtung des Kraftfahrzeugs (1) beweglich an dem hinteren Tragrahmen (10b) angeordnet ist.

8. Kraftfahrzeug (1) gemäß einem der vorhergehenden Ansprüche, wobei der vordere Tragrahmen (10a) wenigstens ein, insbesondere konusförmiges Führungselement (131) aufweist, welches dazu ausgebildet ist, in der Ruheposition der Ladeplattform in ein entsprechend gegengleich geformtes Führungsgegenelement (132), welches am abknickbaren Teil des Kraftfahrzeugs (1) angeordnet ist, einzugreifen.

9. Kraftfahrzeug (1) gemäß dem vorhergehenden Anspruch, wobei zwischen Führungselement (131) und Führungsgegenelement (132) ein reversibel verformbares Material angeordnet ist und die Trajektorie der Knickbewegung der Ladeplattform insbesondere durch eine Kippschere derart definiert ist, dass beim Knicken der Ladeplattform von der Arbeitsposition in die Ruheposition das Führungselement (131) zu einem Zeitpunkt stärker in das Führungsgegenelement (132) gedrückt wird, als bei der finalen Ruheposition.

10. Verfahren zur Herstellung eines Kraftfahrzeugs (1), aufweisend die folgenden Schritte:
(A) Bereitstellen eines Kraftfahrzeugs mit einem Tragrahmen,
(B) Trennen des Tragrahmens in einen vorderen Tragrahmen (10a) und einen hinteren Tragrahmen (10b), wobei die Position des Trennens zwischen einer Vorder- und einer Hinterachse des Transporters liegt,
(C)Verbinden des vorderen Tragrahmens (10a) mit dem hinteren Tragrahmen (10b) durch eine Gelenkvorrichtung (11) derart, dass der hintere Tragrahmen (10b) gegen den vorderen Tragrahmen (10a) abknickbar ist,
(D)Verbinden einer Ladeplattform mit dem hinteren Tragrahmen (10b),
(E) Installation eines Hubzylinders (14) derart, dass dieser eine Knickbewegung des hinteren Tragrahmens (10b) und des vorderen Tragrahmens (10a) auszuführen vermag,
**dadurch gekennzeichnet, dass**
das Verbinden des vorderen Tragrahmens (10a) mit dem hinteren Tragrahmen (10b) durch eine Gelenkvorrichtung (11) derart erfolgt, dass eine Drehachse der Gelenkvorrichtung (11) in Längsrichtung des Kraftfahrzeugs (1) auf Höhe eines Kardanwellengelenks (121) einer Kardanwelle (12) des Kraftfahrzeugs (1) angeordnet ist.

## Claims

1. Motor vehicle (1) having a loading platform, comprising
a front support frame (10a) and a rear support frame (10b) which are connected to each other via a joint device (11) which is designed to allow a folding movement of the rear support frame (10b) to the front support frame (10a) about an axis of rotation,
a lifting cylinder (14) designed to exert the folding movement between the rear support frame (10b) and the front support frame (10a),
the loading platform being firmly connected to the rear support frame (10b) and thus being movable from a working position to a rest position and vice versa by means of the folding movement,
the front support frame (10a) and the rear support frame (10b) each having at least one support arranged in the longitudinal direction of the vehicle, the supports having identical cross-sections,
**characterized in that**
the motor vehicle (1) has a cardan shaft (12) comprising a cardan shaft joint (121), the axis of rotation of the joint device (11) being arranged in the longitudinal direction of the motor vehicle (1) at the level of the cardan shaft joint (121).

2. Motor vehicle (1) according to the preceding claim, wherein the front support frame (10a) has a stabilizing element (114a) and the rear support frame (10b) has a stabilizing counterpart (114b) or vice versa, wherein the stabilizing element (114a) and the stabilizing counterpart (114b) are designed to interlock in the rest position of the loading platform in such a way that forces in at least one transverse direction of the motor vehicle (1) are transferred from the front support frame (10a) to the rear support frame (10b) or vice versa.

3. Motor vehicle (1) according to the preceding claim, wherein the stabilizing element (114a) is designed as a sheet metal element and the stabilizing counterpart (114b) is designed as a correspondingly oppositely shaped pocket, which is designed to receive the sheet metal element in the rest position of the loading platform, such that the stabilizing counterpart (114b) surrounds the sheet metal element from both sides in a transverse direction to the motor vehicle (1).

4. Motor vehicle (1) according to any of the preceding claims, wherein the joint device (11) is formed by a front articulation bracket (112) on the front support frame (10a) and a rear articulation bracket (113) on the rear support frame (10b), wherein the front articulation bracket (112) and the rear articulation bracket (113) are connected to each other via a joint (111) which is designed to allow the folding movement of the rear support frame (10b) to the front support frame (10a).

5. Motor vehicle (1) according to the preceding claim in conjunction with one of the preceding claims 2 or 3, wherein the stabilizing element (114a) and the stabilizing counterpart (114b) are arranged on the front articulation bracket (112) and the rear articulation bracket (113), respectively.

6. Motor vehicle (1) according to any of the preceding claims, wherein the motor vehicle (1) has a parking brake comprising a cable line which is led from a driver's cab (18) to a rear axle of the motor vehicle (1) and further a parking brake device (15) is provided which leads the cable line over a deflection element, in particular a deflection pulley (154), which is arranged on a structure (151) which is movably mounted in the longitudinal direction of the motor vehicle (1) on the rear support frame (10b) and rotatably mounted about a transverse axis of the motor vehicle on the front support frame (10a), wherein a Bowden cable is connected to the structure (15) at the rear end in the longitudinal direction of the motor vehicle (1) and leads the cable line to a brake actuator to be actuated by the parking brake.

7. Motor vehicle (1) according to the preceding claim, wherein the structure (151) is movably arranged on the rear support frame (10b) in the longitudinal direction of the motor vehicle (1) by means of a rod (153) arranged on the structure (151) which rod is designed to slide in a guide (153) arranged on the rear support frame (10b).

8. Motor vehicle (1) according to any of the preceding claims, wherein the front support frame (10a) has at least one, in particular conical, guide element (131) which is designed to engage, in the rest position of the loading platform, in a correspondingly oppositely shaped guide counter element (132) which is arranged on the foldable part of the motor vehicle (1).

9. Motor vehicle (1) according to the preceding claim, wherein a reversibly deformable material is arranged between the guide element (131) and the guide counter element (132), and the trajectory of the folding movement of the loading platform is defined in particular by a tilting scissor mechanism such that when the loading platform folds from the working position to the rest position, the guide element (131) is pressed more strongly into the guide counter element (132) at a certain time than at the final rest position.

10. Method for producing a motor vehicle (1), comprising the following steps:
(A) providing a motor vehicle with a support frame,
(B) separating the support frame into a front support frame (10a) and a rear support frame (10b), the position of the separation being between a front and a rear axle of the transporter,
(C) connecting the front support frame (10a) to the rear support frame (10b) by means of a joint device (11) such that the rear support frame (10b) can be folded against the front support frame (10a),
(D) connecting a loading platform to the rear support frame (10b),
(E) installation of a lifting cylinder (14) such that it
is able to perform a folding movement of the rear support frame (10b) and the front support frame (10a),
**characterized in that**
connecting the front support frame (10a) to the rear support frame (10b) is effected by means of a joint device (11) such that an axis of rotation of the joint device (11) is arranged in the longitudinal direction of the motor vehicle (1) at the level of a cardan shaft joint (121) of a cardan shaft (12) of the motor vehicle (1).

## Revendications

1. Véhicule automobile (1) comportant une plate-forme de chargement, présentant
un cadre de support avant (10a) et un cadre de support arrière (10b) reliés entre eux par l'intermédiaire d'un dispositif d'articulation (11) conçu pour permettre un mouvement de torsion du cadre de support arrière (10b) par rapport au cadre de support avant (10a) autour d'un axe de rotation,
un vérin de levage (14) configuré pour exercer le mouvement de torsion entre le cadre de support arrière (10b) et le cadre de support avant (10a),
dans lequel la plate-forme de chargement est reliée de manière fixe au cadre de support arrière (10b) et peut ainsi être déplacée par le mouvement de torsion d'une position de travail à une position de repos et inversement,
dans lequel le cadre de support avant (10a) et le cadre de support arrière (10b) présentent respectivement au moins un support disposé dans la direction longitudinale de véhicule, dans lequel les supports présentent des sections transversales identiques,
**caractérisé en ce que**
le véhicule automobile (1) présente un arbre à cardan (12) comportant une articulation d'arbre à cardan (121), dans lequel l'axe de rotation du dispositif d'articulation (11) est disposé dans la direction longitudinale du véhicule automobile (1) à hauteur de l'articulation d'arbre à cardan (121).

2. Véhicule automobile (1) selon la revendication précédente, dans lequel le cadre de support avant (10a) présente un élément de stabilisation (114a) et le cadre de support arrière (10b) présente une contrepartie de stabilisation (114b) ou inversement, dans lequel l'élément de stabilisation (114a) et la contrepartie de stabilisation (114b) sont conçus pour venir en prise l'un dans l'autre dans la position de repos de la plate-forme de chargement de telle sorte que des forces dans au moins une direction transversale du véhicule automobile (1) sont transmises du cadre de support avant (10a) au cadre de support arrière (10b) ou inversement.

3. Véhicule automobile (1) selon la revendication précédente, dans lequel l'élément de stabilisation (114a) est réalisé sous forme d'élément en tôle et la contrepartie de stabilisation (114b) est réalisée sous forme de poche de forme opposée correspondante conçue pour recevoir l'élément en tôle dans la position de repos de la plate-forme de chargement, de sorte que la contrepartie de stabilisation (114b) entoure de part et d'autre l'élément en tôle dans la direction transversale au véhicule automobile (1).

4. Véhicule automobile (1) selon l'une des revendications précédentes, dans lequel le dispositif d'articulation (11) est formé par une console de torsion avant (112) sur le cadre de support avant (10a) et par une console de torsion arrière (113) sur le cadre de support arrière (10b), dans lequel la console de torsion avant (112) et la console de torsion arrière (113) sont reliées entre elles par l'intermédiaire d'une articulation (111) conçue pour permettre le mouvement de torsion du cadre de support arrière (10b) par rapport au cadre de support avant (10a).

5. Véhicule automobile (1) selon la revendication précédente, en combinaison avec l'une des revendications précédentes 2 ou 3, dans lequel l'élément de stabilisation (114a) et la contrepartie de stabilisation (114b) sont disposés sur la console de torsion avant (112) ou sur la console de torsion arrière (113).

6. Véhicule automobile (1) selon l'une des revendications précédentes, dans lequel le véhicule automobile (1) présente un frein de stationnement comportant un câble sous gaine guidé depuis une cabine de conducteur (18) jusqu'à un essieu arrière du véhicule automobile (1), et un dispositif de frein de stationnement (15) est en outre prévu, lequel guide le câble sous gaine par l'intermédiaire d'un élément de renvoi, en particulier un galet de renvoi (154), disposé sur un châssis (151) monté mobile dans la direction longitudinale du véhicule automobile (1) sur le cadre de support arrière (10b) et monté rotatif autour d'un axe transversal du véhicule automobile sur le cadre de support avant (10a), dans lequel un câble Bowden est connecté au châssis (15) au niveau de l'extrémité arrière dans la direction longitudinale du véhicule automobile (1) et guide le câble sous gaine vers un actionneur de frein à actionner par le frein de stationnement.

7. Véhicule automobile (1) selon la revendication précédente, dans lequel le châssis (151) est monté mobile sur le cadre de support arrière (10b) dans la direction longitudinale du véhicule automobile (1) à l'aide d'une barre (153) disposée sur le châssis (151) et conçue pour coulisser dans un guide (153) disposé sur le cadre de support arrière (10b).

8. Véhicule automobile (1) selon l'une des revendications précédentes, dans lequel le cadre de support avant (10a) présente au moins un élément de guidage (131), en particulier de forme conique, conçu pour venir en prise, dans la position de repos de la plate-forme de chargement, avec un contre-élément de guidage (132) de forme opposée correspondante disposé sur la partie pouvant subir une torsion du véhicule automobile (1).

9. Véhicule automobile (1) selon la revendication précédente, dans lequel un matériau déformable de manière réversible est disposé entre l'élément de guidage (131) et le contre-élément de guidage (132) et la trajectoire du mouvement de torsion de la plate-forme de chargement est définie en particulier par une cisaille de basculement de telle sorte que, lors de la torsion de la plate-forme de chargement de la position de travail à la position de repos, l'élément de guidage (131) est, à un moment, plus fortement enfoncé dans le contre-élément de guidage (132) que dans la position de repos finale.

10. Procédé de fabrication d'un véhicule automobile (1), présentant les étapes suivantes :
(A) fourniture d'un véhicule automobile comportant un cadre de support,
(B) séparation du cadre de support en un cadre de support avant (10a) et un cadre de support arrière (10b), dans lequel la position de la séparation est située entre un essieu avant et un essieu arrière de l'utilitaire,
(C) liaison du cadre de support avant (10a) au cadre de support arrière (10b) par un dispositif d'articulation (11) de telle sorte que le cadre de support arrière (10b) peut être tordu contre le cadre de support avant (10a),
(D) liaison d'une plate-forme de chargement au cadre de support arrière (10b),
(E) installation d'un vérin de levage (14) de telle sorte que celui-ci
permet de réaliser un mouvement de torsion du cadre de support arrière (10b) et du cadre de support avant (10a),
**caractérisé en ce que**
la liaison du cadre de support avant (10a) au cadre de support arrière (10b) est effectuée par un dispositif d'articulation (11) de telle sorte qu'un axe de rotation du dispositif d'articulation (11) est disposé dans la direction longitudinale du véhicule automobile (1) à hauteur d'une articulation d'arbre à cardan (121) d'un arbre à cardan (12) du véhicule automobile (1).
